(19) Europäisches Patentamt
European Patent Office
Office européen des brevets

(11) **EP 2 159 594 B1**

(12) **EUROPEAN PATENT SPECIFICATION**

(45) Date of publication and mention
of the grant of the patent:
**28.03.2012   Bulletin 2012/13**

(51) Int Cl.:
***G01S 5/02*** *(2010.01)*

(21) Application number: **08163045.1**

(22) Date of filing: **27.08.2008**

(54) **Method and an apparatus for determining the location of a device in a network**

Verfahren und Vorrichtung zum Bestimmen des Standorts eines Geräts in einem Netz

Procédé et appareil de détermination de l'emplacement d'un dispositif dans un réseau

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**03.03.2010   Bulletin 2010/09**

(73) Proprietors:
 • **Mitsubishi Electric R&D Centre Europe B.V.**
**1119 NS  Schiphol Rijk (NL)**
Designated Contracting States:
**FR**
 • **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MT NL NO PL PT RO SE SI SK TR**

(72) Inventors:
 • **Gresset, Nicolas**
**35708 Rennes Cedex 7 (FR)**
 • **Abdaoui, Rahma**
**35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**EP-A- 0 800 319      EP-A- 1 193 994
WO-A-98/52376      WO-A-2004/012375
DE-A1- 10 308 005      US-A1- 2003 063 589**

**Description**

The present invention relates generally to a method and an apparatus for determining the location of a device in a wireless telecommunication network.

Today, more and more dedicated devices or devices like mobile phones provide Global Position System features or devices like a base station of a wireless cellular telecommunication device newly installed.

Such terminals may be located into areas, like buildings wherein satellite broadcasted signals can not be received.

Even if the signals broadcasted by the satellites can be received, it is not possible to determine accurately the location of the device, for example at which floor of a building the device stands.

The estimation of the position of a device, based on the observation of the difference of times of arrival available at the device of signals transmitted by terrestrial equipments, is an example of known technique.

The transmitted signals may be broadcasted signals, unicast signals or multicast signals.

The patent application DE 103 08 005 discloses a method for determining the location of a device to be located in a network comprising a group of devices having a known location.

For example, we will take an example wherein the device to be geo-located is a mobile terminal and the devices placed in different known positions used for the geo-location of the mobile terminal are base stations of a wireless cellular telecommunication network.

The device may be a base station of a wireless cellular telecommunication network like a femto base station or an access point of a wireless local area network.

The devices which have a known position may be dedicated devices, or access nodes of wireless local area networks having a known position or femto base stations having a known position.

The difference of times of arrival is a technique based on the computation of the difference between the arrivals times of the signals transmitted from several equipments.

Let us consider a $i$-th equipment at position $P_i=(x_i,y_i,z_i)$ which transmits a signal at time $t_i^0$ which is received at time $t_i$ by a receiver at position $P=(x,y,z)$. The propagation time $t_i\text{-}t_i^0$ is assumed to be proportional to the distance $d_i$ between the i-th transmitter and the receiver, and the proportional factor is the light speed, i.e., $c=3.\,10^8$ m/s (299792458 m/s), we can write :

$$d_i = c.(t_i - t_i^0) = \|P_i - P\|$$

$$d_i = \sqrt{(x_i - x)^2 + (y_i - y)^2 + (z_i - z)^2}.$$

If $t_i^0$ is known, three observations of $d_i$ parameters are needed to solve a system with three unknown coordinates $(x,y,z)$, and two observations of $d_i$ parameters are needed to solve a system with two unknown coordinates $(x,y)$.

If the transmitters are synchronous, which will be the case in next generations of wireless cellular telecommunication networks, the time $t_i^0$ of transmission by a $j$-th transmitter at position $Pj=(x_jy_jz_j)$ can be equal to $t_j^0 = t_i^0$.

In that case, it is sufficient to compute $d_i\text{-}d_j$ to remove the dependency on the transmission time $t_i^0$ and four observations of $d_i$ parameters are needed to solve a system with three unknown coordinates $(x,y,z)$.

Thus, in a two-dimensional case, three observations of $d_i$ parameters are needed to solve a system with two unknown coordinates if $t_i^0$ is unknown.

The first received signal is for example used as a reference for the time basis.

Let call $d_i$ the distance between the transmitter and the receiver, and let define $f_i=c.(t_i\text{-}t_i)$ the constant of a hyperbola, also called semi-major axis (SMA).

As a remark, the points $(x,y,z)$ satisfy the following formula $f_i = c.(t_i - t_1)= \|P_1 - P\|\text{-}\|P_1\text{-}P\|$ and belong to an hyperbola $H(P_i,f_i)$.

As a remark, the points $(x,y,z)$ satisfy the following formula $f_i = c.(t_i - t_1) = \|P_1 - P\| - \|P_1 - P\|$ and belong to an hyperbola $H(P_i,f_i)$.

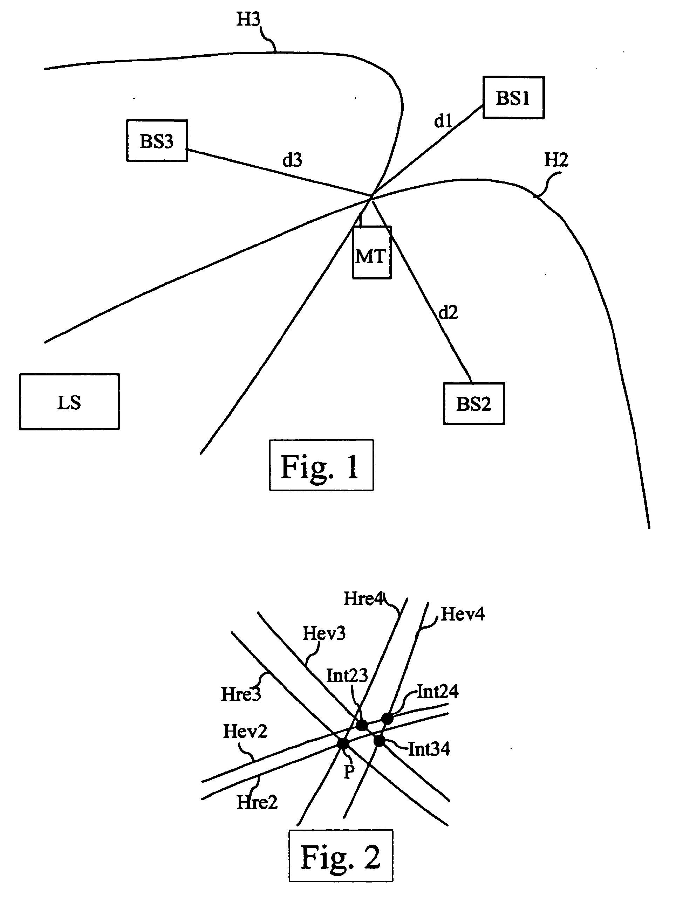

For example, the Fig. 1 shows a two-dimensional case where a mobile terminal MT is the equipment to be geo-located, BS1, BS2 and BS3 are the base stations BS which transmit the signal to the mobile terminal MT.

$P_1$ is the location of the base station BS1, $P_2$ is the location of the base station BS2 and P is the location of the mobile terminal MT. H2 is the hyperbola on which the mobile terminal MT may be located:

$$f_2 = c.(t_2 - t_1) = \left\| P_2 - P \right\| - \left\| P_1 - P \right\|.$$

$P_3$ is the location of the base station BS3 H3 is the hyperbola on which the mobile terminal MT may be located:

$$f_3 = c.(t_3 - t_1) = \left\| P_3 - P \right\| - \left\| P_1 - P \right\|.$$

The location of the mobile terminal MT is the intersection of H2 and H3.

If the mobile terminal MT perfectly knows the variables $P_i$ and $f_i$, the mobile terminal MT location can be perfectly obtained from at least three base stations BS signals for a two-dimensional case or from at least four base stations BS signal for a three-dimensional case. However, if $P_i$ and $f_i$ observations are noisy, the hyperbolas do not intersect in a singular point.

Such case is disclosed in Fig. 2.

In Fig. 2, six hyperbolas are shown in a two dimension example. The hyperbolas Hre2, Hre3 and Hre4 are hyperbolas without any imperfect determination. The hyperbolas Hev2, Hev3 and Hev4 are hyperbolas deduced from a noisy observation of the propagation times.

P is the intersection of the hyperbolas Hre2, Hre3 and Hre4 and is the exact location of the mobile terminal MT.

The point Int23 is the intersection of the hyperbolas Hev2 and Hev3. The point Int24 is the intersection of the hyperbolas Hev2 and Hev4. The point Int34 is the intersection of the hyperbolas Hev3 and Hev4.

The points Int23, Int24 and Int34 are different from each other and also different from the exact location P of the mobile terminal MT.

A determination of the location of the mobile terminal from the Int23, Int24 and Int34 will provide an inaccurate result.

The present invention aims at providing a method and a device for determining the location of a mobile terminal in a wireless cellular telecommunication network which is more accurate than the state of the art and which takes into account possible inaccurate measurements.

To that end, the present invention concerns a method and an apparatus for determining the location of a device to be located in a network comprising a group of devices having a known location, wherein at least one signal is transmitted by at least one device, as defined in the appended set of claims.

The determination of the location of a device to be located is more accurate than the state of the art especially when only one shot of observations is available.

Furthermore, the proposed invention has performance which improves with an increasing number of observations.

State of the art algorithms are based on linear adaptive filtering techniques that converge to a solution. The state of the art techniques show bad performances when a low number of observations are available for a position estimation, for example when the device is moving fast, or if the transmitters do not transmit continuously.

In opposite, the present invention does not need observations on long period of time as the state of the art algorithms.

Furthermore, by expanding each group of positions using a margin, the present invention takes into account the statistics of possible inaccurate measurements of the time of arrival of the at least one transmitted signal.

According to a particular feature, the margin is dependent on the sampling time period or the bandwidth of the received transmitted signal.

Thus, the invention takes advantage of higher amount of information, or in other words, the invention provides a better geo-location estimation as the signal bandwidth increases.

According to a particular feature, the location of the device to be located is determined by calculating a linear combination of the selected points.

Thus, the invention can take into account all available observations and combine them, which makes it very flexible and provide the best performance in a given situation.

According to a particular feature, the location of the device to be located is then barycentre of the selected points.

Thus, the invention always ensures to find at least one point from the observations, with a single shot of observations.

According to a particular feature of a first mode of realisation, plural devices having a known position transmit a signal, each device having a known position transmits a signal which is different from the signal transmitted by the other devices having a known position.

According to a particular feature of a first mode of realisation, the device to be located is a mobile terminal and the devices having a known position are base stations of a wireless cellular network and each base station broadcasts a signal which is different from the signal broadcasted by the other base stations.

Thus, devices to be located potentially have a large number of observations. Indeed, mobile terminals can receive and detect signals of several bases stations, even if they are not in communication with them.

According to a particular feature of a first mode of realisation, each determined parameter is proportional to a difference of two times of arrival of transmitted signals.

Thus, if the network is synchronized, there is no need to know the time of transmission of the signal by each of the several transmitters.

According to a particular feature of the first mode of realisation, the method is executed by the mobile terminal or one base station or a location server of the wireless cellular telecommunication network.

Thus, the computation complexity can be placed in any location of the network, and for example be computed by an operator of a wireless communication network.

According to a particular feature of a second mode of realisation, the at least one device which transmits at least one signal is the device to be located.

According to a particular feature of the second mode of realisation, the obtained times of arrival are times of arrival of the transmitted signal received by each device having a known position of the group of devices having a known position.

According to a particular feature of the second mode of realisation, the device to be located is a mobile terminal and the devices having a known position are base stations of a wireless cellular network.

Thus, the signal used for geo-location is possibly a signal already defined for the wireless cellular telecommunication network, and the overhead of including a geo-location system in the network is very small.

According to a particular feature of the second mode of realisation, the method is executed by one base station or a location server of the wireless cellular telecommunication network.

Thus, the mobile terminal complexity is not increased.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless cellular telecommunication network in which the present invention is implemented;
Fig. 2 is a diagram representing real and calculated hyperbolic curves determined by a mobile terminal from different differences of arrival times;
Fig. 3 is a diagram representing the architecture of a mobile terminal in which the present invention is implemented ;
Fig. 4 is a diagram representing the architecture of a location server in which the present invention is implemented ;
Fig. 5 is a diagram representing the architecture of a base station in which the present invention is implemented;
Fig. 6 discloses an example of an algorithm executed when received signals are downlink signals ;
Fig. 7 discloses an example of an algorithm executed when received signals are uplink signals ;
Fig. 8 is a diagram representing parts of hyperbolic curves corresponding to parameters, expanded parameters, sets of points according to the present invention.

Fig. 1 represents a wireless cellular telecommunication network in which the present invention is implemented.

The present invention will be disclosed in an example in which a mobile terminal has to be located and wherein the devices having a known position are base stations of a wireless cellular telecommunication network.

In Fig. 1, a group of three base stations BS1, BS2 and BS3 is shown. The base stations BS1, BS2 and BS3 transmit simultaneously a signal which is received by a mobile terminal MT. The transmitted signals are unicasted or multicasted or broadcasted signals. The base station BSi is the i-th Base Station which transmits a signal according to the present invention. That signal may contain information on the geographical position of the base station BSi, or is a signal that uniquely makes the base station BSi recognizable among the signals received by the mobile terminal MT, which a priori knows the positions of the base stations BS. The list of positions of base stations BS can for example be given to the mobile terminal MT after its connection to the wireless cellular telecommunication network or when the mobile terminal MT enters an area which comprises these base stations BS.

The signal structure also allows the mobile terminal MT to determine the time of arrival of the signal transmitted by each base station BSi, or allows to determine each difference of times of arrival between the first signal received by the mobile terminal MT and each signal transmitted by other base stations BS.

Only three base stations BS are shown in the Fig. 1 for the sake of simplicity, bur the wireless cellular telecommunication network comprises a more important number of base stations BS.

Only one mobile terminal MT is shown in the Fig. 1 for the sake of simplicity, but the wireless cellular telecommunication network comprises a more important number of mobile terminals MT.

The mobile terminal MT may be for example a mobile phone or a personal digital assistant or a personal computer.

The signals transferred by the base stations BS are preferably synchronized, i.e. transferred at the same instant.

In a variant, the signals transferred are not synchronized and each signal comprises information representative of its transmission time.

When the transmission time of the signals is known by the mobile terminal MT, the group of base stations BS comprises at least two base stations BS if a two dimensional location determination is performed.

When the transmission time of the signals is known by the mobile terminal MT, the group of base stations BS comprises at least three base stations BS if a three dimensional location is performed.

When the transmission time of the signals is unknown by the mobile terminal MT, the group of base stations BS comprises at least three base stations BS if a two dimensional location determination is performed.

When the transmission time of the signals is known by the mobile terminal MT, the group of base stations BS comprises at least four base stations BS if a three dimensional location determination is performed.

The mobile terminal MT is located at a distance d1 from the base station BS1, at a distance d2 from the base station BS2 and at a distance d3 from the base station BS3.

According to the example of the Fig. 1, d1 is the shortest distance among d1, d2 and d3. The signal transmitted by the base station BS1 is the first received signal among the signals received by the mobile terminal MT. The base station BS1 is considered as the reference base station BS 1.

A location server LS is disclosed in the Fig. 1. The location server LS may be able to determine the location of any mobile terminal MT comprised in the wireless cellular telecommunication network using the times of arrival of signals transferred by the mobile terminal MT and received by the base stations BS and/or using the times of arrival of signals transferred by base stations BS and received by the mobile terminal MT.

According to the invention, the location of a device like a mobile terminal MT to be located is determined. A network comprising a group of devices having a known location is used for that. The network may be for example a wireless cellular telecommunication network and the devices having a known location may be the base stations BS. The location of the mobile terminal MT is determined by;

- obtaining times of arrival of the at least one transmitted signal,
- determining, for at least a part of the times of arrival, a parameter for each time of arrival of the part of times of arrivals,
- determining for each determined parameter, two expanded parameters by applying a margin on each determined parameter in order to take into account an uncertainty on the determined parameter,
- determining, for each n-tuple of expanded parameters composed of expanded parameters of n different parameters, a set of points from a function which takes into account the position of at least two devices having a known location and the n-tuple of expanded parameters,
- selecting points of the determined sets of points which satisfy a condition involving the position of each device having a known location of the group of devices having a known location and all the expanded parameters.
- determining the location of the device to be located from the selected points.

According to a particular feature, the parameters are calculated from the set of times of arrival of signals detected by the mobile terminal MT, i.e., having a sufficient signal strength to identify the base station BS which has transmitted said signal.

According to a particular feature, each determined parameter may be proportional to the times of arrival of transmitted signals.

According to a particular feature, the parameters are the times of arrival multiplied by the light speed.

According to a particular feature, the function that determines points from the n-tuples of expanded parameters takes as input the position points of the base stations BS associated to the times of arrival involved in the parameters computation, and returns the points being at the intersection of spheres, centres of which are the positions of the base stations BS associated to the times of arrival involved in the parameters computation and radius of which are the expanded parameters.

According to a particular feature, the condition to select points from the determined set of points is defined as follows: for a given point of the determined set of points and for any base station BS associated to the time of arrival, the radius of the sphere centered on the location of this base station BS and containing the said point must be lower than the greater expanded parameter associated to said parameter and greater than the lower expanded parameter associated to said parameter.

According to another particular feature, each determined parameter may be proportional to a difference of two times of arrival of transmitted signals.

According to a particular feature, the parameters are computed from the set of times of arrival that does not contain the lowest time of arrival associated to the reference base station BS, minus the lowest time of arrival, and multiplied by the light speed.

According to a particular feature, the function that determines points from the n-tuples of expanded parameters takes as input the position points of the base stations associated to the times of arrival involved in the parameters computation, and returns the points being at the intersection of hyperbolas, SMA of which are defined by the reference base station BS and the base stations BS which transmit the signals of which the times of arrival are involved in the parameters computation.

According to a particular feature, the condition to select points from the determined set of points is defined as follows: for a given point of the determined set of points and for any base station BS associated to the time of arrival, the focal of the hyperbola, SMA of which is a function of the reference base station position BS and the said base station BS position, and containing the said point must be lower than the greater expanded parameter associated to said parameter and greater than the lower expanded parameter associated to said parameter.

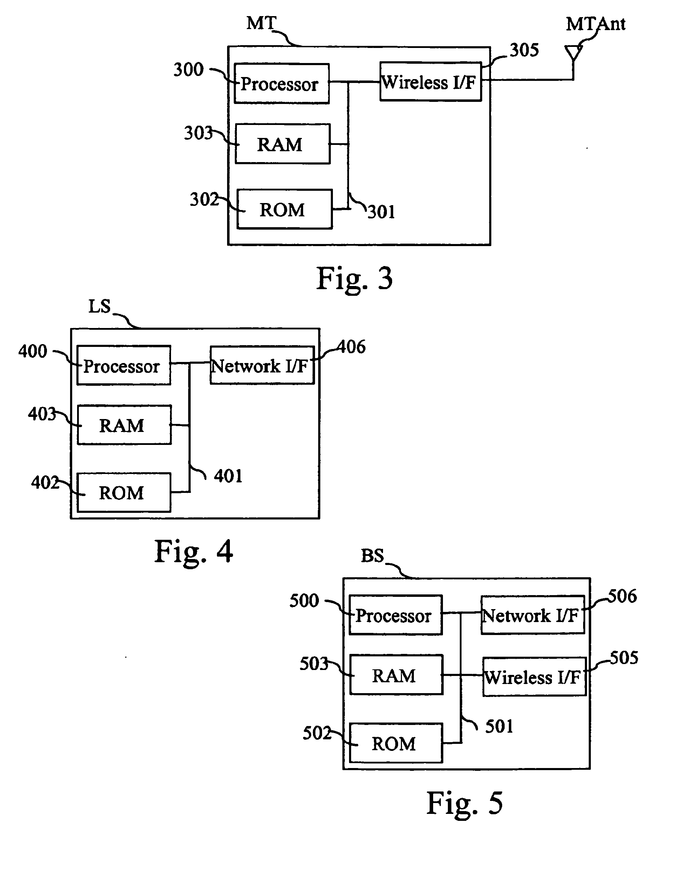

Fig. 3 is a diagram representing the architecture of a mobile terminal in which the present invention is implemented.

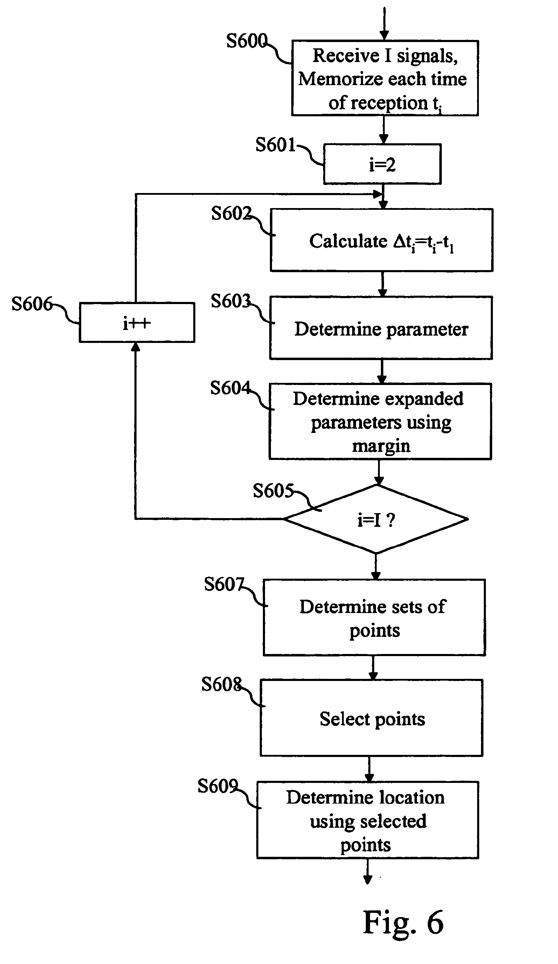

The mobile terminal MT has, for example, an architecture based on components connected together by a bus 301 and a processor 300 controlled by the program as disclosed in the Fig. 6.

The bus 301 links the processor 300 to a read only memory ROM 302, a random access memory RAM 303 and a wireless interface 305.

The memory 303 contains registers intended to receive variables and the instructions of the program as disclosed in the Fig. 6.

The processor 300 controls the operation of the wireless interface 305.

The read only memory 302 contains instructions of the program as disclosed in the Fig. 6, which are transferred, when the mobile terminal MT is powered on, to the random access memory 303.

The wireless interface 305 enables the mobile terminal MT to transfer and/or receive signals or messages to/from the base stations BS.

The wireless interface 305 comprises means for measuring the difference of times of arrival of signals transferred by the base stations BS.

Fig. 4 is a diagram representing the architecture of a location server in which the present invention is implemented.

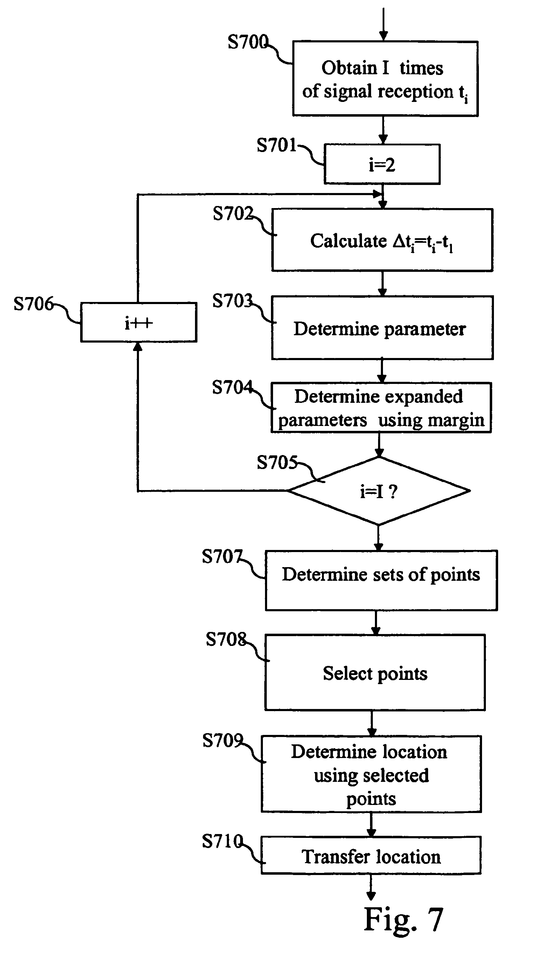

The location server LS has, for example, an architecture based on components connected together by a bus 401 and a processor 400 controlled by the program as disclosed in the Fig. 7.

The bus 401 links the processor 400 to a read only memory ROM 402, a random access memory RAM 403 and a network interface 406.

The memory 403 contains registers intended to receive variables and the instructions of the program related to the algorithm as disclosed in the Fig. 7.

The processor 400 controls the operation of the network interface 406.

The read only memory 402 contains instructions of the programs related to the algorithm as disclosed in the Fig. 7, which are transferred, when the location server LS is powered on, to the random access memory 403.

The location server LS may be connected to a telecommunication network not shown in the Fig. 1 through the network interface 406. For example, the network interface 406 is a DSL (Digital Subscriber Line) modem, or an ISDN (Integrated Services Digital Network) interface, etc. Through such interface, the location server LS may transfer or receive message messages to at least one base station BS.

Fig. 5 is a diagram representing the architecture of a base station in which the present invention is implemented.

The base station BS has, for example, an architecture based on components connected together by a bus 501 and a processor 500 controlled by the program as disclosed in the Fig. 7.

The bus 501 links the processor 500 to a read only memory ROM 502, a random access memory RAM 503, a wireless interface 505 and a network interface 506.

The memory 503 contains registers intended to receive variables and the instructions of the program related to the algorithm as disclosed in the Fig. 7.

The processor 500 controls the operation of the network interface 506 and of the wireless interface 505.

The read only memory 502 contains instructions of the programs related to the algorithm as disclosed in the Fig. 7, which are transferred, when the base station BS is powered on, to the random access memory 503.

The base station BS may be connected to a telecommunication network through the network interface 506. For example, the network interface 506 is a DSL (Digital Subscriber Line) modem, or an ISDN (Integrated Services Digital Network) interface, etc. Through such interface, the base station BS may transfer messages to the location server LS or to other base stations BS or may receive messages from other base stations BS.

The wireless interface 505 may comprise a downlink transmission module which transfers signals to at least one terminal TE and may comprise an uplink reception module which receives signals transferred by at least one terminal TE.

Fig. 6 discloses an example of an algorithm executed when received signals are downlink signals.

The present algorithm will be described when it is executed by the processor 300 of the mobile terminal MT. The present algorithm can also be executed in part by the processor 400 of the location server LS or by the processor 500 of at least one base station BS.

Downlink signals are signals transferred by at least one base station BS.

At step S600, the processor 300 detects the reception by the wireless interface 305 of I transmitted signals.

Each of the i=1 to I transmitted signals is a signal transferred by a base station BSi according to the present invention. The transmitted signal transferred by a base station BS is different from the transmitted signal transferred by other base stations BS.

The time of transmission of each transmitted signal is known or not by the mobile terminal MT.

At the same step, each time of arrival $t_i$ of each transmitted signal is memorized in the RAM memory 303.

At next step S601, the processor 300 sets the value of the variable i to the value two.

When the time of transmission of each transmitted signal is not known by the mobile terminal MT, the processor 300 executes the step S602. At that step, the processor 300 calculates the difference $\Delta t_i = t_i - t_1$ between the time of arrival of the signal transferred by the base station BSi and the time of arrival of the signal transferred by the reference base station BS1 which is the base station BS1 which transmitted signal is received the earliest at the mobile terminal MT. After that, the processor 300 moves to step S603.

When the time of transmission of each transmitted signal is known by the mobile terminal MT, the processor 300 moves to step S603.

At next step S603, the processor 300 determines a parameter for at least a part of the memorized times of arrival.

When the time of transmission of each transmitted signal is known by the mobile terminal MT, the processor 300 determines a parameter for each of the times of arrival. The parameter is the time of reception $t_i$ multiplied by the speed of the light.

All the locations which correspond to that parameter are on a sphere (or circle for the two dimension case).

When the time of transmission of each transmitted signal is not known by the mobile terminal MT, the processor 300 determines a parameter for I-1 times of arrival, one time of reception being used as a reference. The parameter is the difference $\Delta t_i = t_i - t_1$ multiplied by the speed of the light.

All the locations which correspond to that parameter are on a hyperbolic surface (or curve for the two dimension case).

The parameter is a constant of the hyperbolic surface from the calculated difference $\Delta t_i$ using the following formula : $f_i = c.(t_t - t_1)$.

At next step S604, the processor 300 determines for each determined parameter, two expanded parameters by applying a margin noted a on each determined parameter in order to take into account an uncertainty on the determined parameter.

When the time of transmission of each transmitted signal is known by the mobile terminal MT, all the locations which correspond to an expanded parameter are on a sphere.

When the time of transmission of each transmitted signal is not known by the mobile terminal MT, all the locations which correspond to an expanded parameter are on a hyperbolic surface.

The margin a is for example a predetermined value.

In a wireless cellular telecommunication network like the Third Generation Partnership Project/ Long term evolution (3GPP-LTE), the mobile terminal MT synchronizes with several base stations BS in order to perform measurements which are useful for mobility procedures.

In the 3GPP-LTE standard, the mobile terminal MT is able to know the identity of the base station BS after the synchronization process.

Usually, the synchronization mechanism is quite robust and the reference time for the signal is known with an uncertainty modelled by a uniform noise.

In the best case, the range of uncertainty is $[-T_e/2; T_e/2]$ where $T_e$ is the sampling time period of the received signal or is inversely proportional to the signal bandwidth.

In that case, the margin a may be equal to $T_e/2$.

In the following, we will focus on the case of uniformly distributed noise on the reference time for the signal received from the base station BS1, or equivalently we will assume that the SMA of the hyperbola suffers from additive white uniform noise.

Let us assume that the density probability function of the noise affecting the foci observations vector $e$, is known and let $p_n(x)$ denote this distribution.

If no a priori on the position $P$ is available, an optimal estimation of the point $P_{ml}$ maximizing the *likelihood p (e|P_{ml})* equals to

$$P_{ml} = \arg\max(p(e \mid P))$$

Where

$$p(e \mid P) = \prod_i p(e_i \mid P) = \prod_i p_n(e_i - \|P_i - P\| + \|P_1 - P\|).$$

If we now consider a noise uniformly distributed between $-\alpha$ and $\alpha$, the likelihood $p(e|P_{ml})$ is rewritten as :

$$p(e \mid P) = \prod_i rect_{2\alpha}(e_i - \|P_i - P\| + \|P_1 - P\|),$$

where $rect_{2\alpha}$ is a rectangular function $rect_{2\alpha} = 1 / (2\alpha)$ between $-\alpha$ and $\alpha$ included and null function in other cases.

This means that any point lying into the geographical zone such that $p(e|P)$ is non-null is a good candidate.

This implies that the selected point belongs to the intersection of the zones such that :

$$rect_{2\alpha}(e_i - \|P_i - P\| + \|P_1 - P\| \neq 0$$

or that

$$e_i - \alpha \leq \|P_1 - P\| - \|P_i - P\| \leq e_i + \alpha.$$

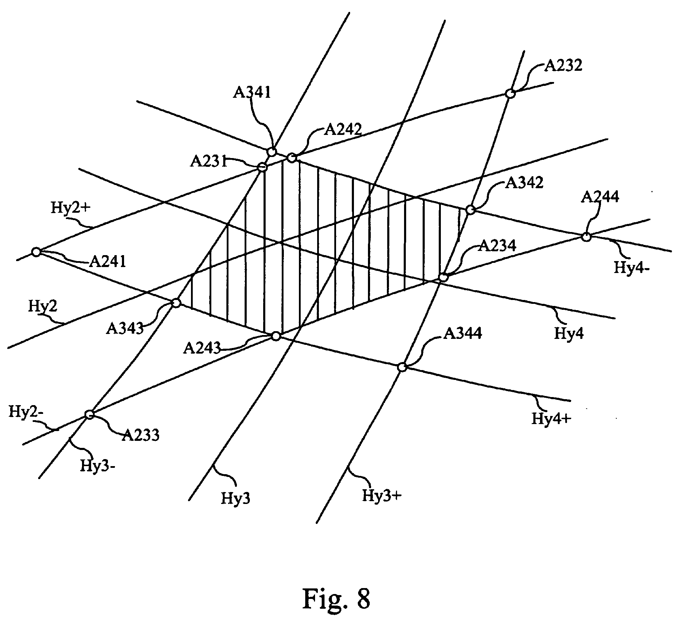

P belongs, for any $i$. to the geographical zone comprised between the hyperbolas $H(P_i, e_i + \alpha)$ and $H(P_i, e_i - \alpha)$ as illustrated in the Fig. 8 which will be disclosed latter on.

At next step S605, the processor 300 checks if the variable i is equal to L

If the variable i is equal to I, the processor 300 moves to step S607. Otherwise, the processor 300 moves to step S606, increments the variable i of one and returns to step S602 in order to execute the loop constituted by the steps S602 to S605.

At step S607, the processor 300 determines, for all possible n-tuples of expanded parameters composed of expanded parameters of n different parameters, a set of points from a function which takes into account the position of at least two base stations and the n-tuple of expanded parameters.

When the transmission time of the signals is known by the mobile terminal MT, n=2 if a two dimensional location is performed. The function that determines points from the 2-tuples of expanded parameters takes as input the position points of the base stations BS which transferred signals of which the times of arrival are involved in the parameters computation. The function returns the points being at the intersection of circles, centres of which are the positions of the base stations BS which transferred circles, centres of which are the positions of the base station BS which transferred signals of which the times of arrival are involved in the parameters computation and radius of which are the expanded parameters.

The function returns 0,1 or 2 points that will be included in the determined set of points. In other words, for a 2-tuples of expanded parameters $f_i$ and $f_j$ associated to the base stations BS positions $P_i$ and $P_j$, the function returns the points P satisfying

$$\begin{cases} \|P_i - P\| = f_i \\ \|P_j - P\| = f_j \end{cases}$$

When the transmission time of the signals is known by the mobile terminal MT, n=3 if a three dimensional location is performed. The function that determines points from the 3-tuples of expanded parameters takes as input the position points of the base stations BS which transferred signals of which the times of arrival are involved in the parameters computation and returns the points being at the intersection of spheres, centres of which are the positions of the base stations BS which transferred signals of which the times of arrival are involved in the parameters computation and radius of which are the expanded parameters.

The function returns 0,1 or 2 points that will be included in the determined set of points. In other words, for a 3-tuples of expanded parameters $f_i$, $f_j$ and $f_k$ associated to the base stations BS positions $P_i, P_j$ and $P_k$, the function returns the points $P$ satisfying

$$\begin{cases} \|P_i - P\| = f_i \\ \|P_j - P\| = f_j \\ \|P_k - P\| = f_k \end{cases}$$

When the transmission time of the signals is unknown by the mobile terminal MT, n=3 if a two dimensional location is performed. The function that determines points from the 3-tuples of expanded parameters takes as input the position points of the base stations BS which transferred signals of which the times of arrival are involved in the parameters computation and returns the points being at the intersection of hyperbolas, SMA of which are defined by the reference base station BS and the base stations BS which transferred signals of which the times of arrival are involved in the parameters computation and foci of which are the expanded parameters. The function returns 0,1 or 2 points that will be included in the determined set of points. In other words, for a 3-tuples of expanded parameters $f_i$, $f_i$ and $f_j$ associated to the base stations BS positions $P_l, P_i$ and $P_j$, the function returns the points $P$ satisfying

$$\begin{cases} \|P_i - P\| - \|P_1 - P\| = f_i \\ \|P_j - P\| - \|P_1 - P\| = f_j \end{cases}$$

When the transmission time of the signals is known by the mobile terminal MT, n=4 if a three dimensional location is performed. The function that determines points from the 4-tuples of expanded parameters takes as input the position points of the base stations BS which transferred signals of which the times of arrival are involved in the parameters computation, returns the points being at the intersection of hyperbolas, SMA of which are defined by the reference base station BS and the base stations BS which transferred signals of which the times of arrival are involved in the parameters computation, and foci of which are the expanded parameters. The function returns 0,1 or 2 points that will be included in the determined set of points. In other words, for a 3-tuples of expanded parameters $f_i, f_i, f_j f_k$ associated to BS positions $P_l P_i P_j P_k$, the function returns the points P satisfying

$$\begin{cases} \|P_i - P\| - \|P_1 - P\| = f_i \\ \|P_j - P\| - \|P_1 - P\| = f_j \\ \|P_k - P\| - \|P_1 - P\| = f_k \end{cases}$$

The function for determining the intersection of hyperbolas is for example as the one disclosed in the paper of Ralph Bucher and D. Misra entitled " A synthesizable VHDL Model of the Exact Solution for Three-dimentional Hyperbolic Positioning System" published in VLSI Design, 2002 Vol 15(2) pp 507-520.

Referring to the **Fig. 8**, the Fig. 8 is a diagram representing parts of hyperbolic curves corresponding to parameters, expanded parameters, sets of points according to the present invention.

In the Fig. 8, an hyperbola $H(P_i, e_i+\alpha)$ is noted Hyi+ and an hyperbola $H(P_i, e_i-\alpha)$ is noted Hyi-.

The hyperbola noted Hy2 is the curve which corresponds to the parameter $\Delta t_2$.

The hyperbola noted Hy2- is the curve which corresponds to the expanded parameter of $\Delta t_2-\alpha$ of the parameter of $\Delta t_2$.

The hyperbola noted Hy2+ is the curve which corresponds to the expanded parameter of $\Delta t_2+\alpha$ of the parameter of $\Delta t_2$.

The hyperbola noted Hy3 is the curve which corresponds to the parameter $\Delta t_3$.

The hyperbola noted Hy3- is the curve which corresponds to the expanded parameter of $\Delta t_3-\alpha$ of the parameter of $\Delta t_3$.

The hyperbola noted Hy3+ is the curve which corresponds to the expanded parameter of $\Delta t_3+\alpha$ of the parameter of $\Delta t_3$.

The hyperbola noted Hy4 is the curve which corresponds to the parameter $\Delta t_4$.

The hyperbola noted Hy4- is the curve which corresponds to the expanded parameter of $\Delta t_4-\alpha$ of the parameter of $\Delta t_4$.

The hyperbola noted Hy4+ is the curve which corresponds to the expanded parameter of $\Delta t_4+\alpha$ of the parameter of $\Delta t_4$.

The determination, for each n-tuple of expanded parameters composed of expanded parameters of n different parameters, of a set of points from the function which takes into account the position of at least two base stations and the n-tuple of expanded parameters is equivalent to determining the intersections of the hyperbolas taken by n-tuples.

The point A241 is the intersection of the hyperbolas Hy2+ and Hy4+. The point A242 is the intersection of the hyperbolas Hy2+ and Hy4-. The point A231 is the intersection of the hyperbolas Hy2+ and Hy3-. The point A232 is the intersection of the hyperbolas Hy2+ and Hy3+. The point A233 is the intersection of the hyperbolas Hy2- and Hy3-. The point A243 is the intersection of the hyperbolas Hy2- and Hy4+. The point A234 is the intersection of the hyperbolas Hy2- and Hy3+. The point A244 is the intersection of the hyperbolas Hy2- and Hy4-. The point A343 is the intersection of the hyperbolas Hy3- and Hy4+. The point A341 is the intersection of the hyperbolas Hy3- and Hy4-. The point A344is the intersection of the hyperbolas Hy3+ and Hy4+. The point A342 is the intersection of the hyperbolas Hy3+ and Hy4-.

In this example, only one point is found as an intersection of a pair of hyperbolas, but as already stated, the number of points at the output of the function that compute the determined points is zero, one or two.

In the Fig. 8, each of the twelve points is the single output of the function applied on the twelve computations of intersections of the pairs of hyperbolas (Hy2+, Hy 3+), (Hy 2+, Hy 3-), (Hy 2+, Hy 4+), (Hy 2+, Hy 4-), (Hy 2-, Hy 3+), (Hy 2-, Hy 3-), (Hy 2-, Hy 4+), (Hy 2-, Hy 4-), (Hy 3+, Hy 4+), (Hy 3+, Hy 4-), (Hy 3-, Hy 4+) and (Hy 3-, Hy 4-).

At next step S608, the processor 300 selects points of the determined sets of points which satisfy a condition involving the position of each base station of the group of base stations and all the expanded parameters.

The selection of the points of the determined sets of points which satisfy a condition involving the position of each base station of the group of base stations and all the expanded parameters correspond to the selection of the determined intersections.

According to the example of the Fig. 8, the processor 300 selects the intersections A343, A231, A242, A342, A234 and A243.

The processor 300 doesn't select the intersection A241 as the intersection A241 does not belong to the expanded zone of the hyperbola Hy3. The processor 300 doesn't select the intersection A233 as the intersection A233 does not belong to the expanded zone of the hyperbola Hy4. The processor 300 doesn't select the intersection A342 as the intersection A342 does not belong to the expanded zone of the hyperbola Hy2. The processor 300 doesn't select the intersection A341 as the intersection A341 does not belong to the expanded zone of the hyperbola Hy2. The processor 300 doesn't select the intersection A233 as the intersection A233 does not belong to the expanded zone of the hyperbola Hy4. The processor 300 doesn't select the intersection A232 as the intersection A232 does not belong to the expanded zone of the hyperbola Hy4. The processor 300 doesn't select the intersection A244 as the intersection A244 does not belong to the expanded zone of the hyperbola Hy3.

When the transmission time of the signals is known by the mobile terminal MT, the intersections are selected if an intersection A follows the following rule:

$$e_j - \alpha \leq \|P_j - A\| \leq e_j + \alpha$$

When the transmission time of the signals is unknown by the mobile terminal MT, the intersections are selected if an intersection A follows the following rule:

$$e_j - \alpha \le \left\| P_j - A \right\| - \left\| P_1 - A \right\| \le e_j + \alpha$$

At next step S609, the processor 300 determines an information representative of the location of the mobile terminal MT.

The information representative of the location of the mobile terminal MT is for example the dashed area in the Fig. 8.

The information representative of the location of the mobile terminal MT is for example determined by computing a linear combination of the selected intersections $B_i$:

$$C = \frac{1}{N} \sum_{i=1}^{N} \beta_i B_i .$$

For example, one can choose $\beta_i = l$, which means that $C$ is the barycentre of the of the selected intersections.

When the present algorithm is partly executed by the processor 400 or the processor 500, the step S600 is executed by the processor 300 and each $t_i$ is transferred to a base station BSi or to the location server LS.

The steps S601 to S609 are executed by the processor 400 or the processor 500 and the information representative of the location may be transferred to the mobile terminal MT.

**Fig. 7** discloses an example of an algorithm executed when received signals are uplink signals.

The present algorithm will be described when it is executed by the processor 400 of the location server LS. The present algorithm can also be executed in part by the processor 500 of at least one base station BS.

At step S700, the processor 400 obtains I times of arrival ti of a signal transferred by the mobile terminal MT. The time of arrival ti is the time of arrival of the signal received by the base station BSi. Each time ti is transferred by the base station BSi through its respective network interface 506.

The time of transmission of the transmitted signal is known or not by the processor 400.

At the same step, each time of arrival $t_i$ of the transmitted signal is memorized in the RAM memory 403.

At next step S701, the processor 400 sets the value of the variable i to the value two.

When the time of transmission of each transmitted signal is not known by the processor 400, the processor 400 executes the step S702. At that step, the processor 400 calculates the difference $\Delta t_i = t_i - t_l$ between the time of arrival of the signal received by the base station BSi and the time of arrival of the signal received by the base station BS1 which is the base station BS1 which received the earliest the signal transmitted by the mobile terminal MT.

After that, the processor 400 moves to step S703.

When the time of transmission of the transmitted signal is known by the processor 400, the processor 400 moves to step S703.

At next step S703, the processor 400 determines a parameter for at least a part of the memorized times of arrival.

When the time of transmission of the transmitted signal is known by the processor 400, the processor 400 determines a parameter for each of the times of arrival. The parameter is the time of arrival $t_i$ multiplied by the speed of the light.

All the locations which correspond to that parameter are on a sphere.

When the time of transmission of the transmitted signal is not known by the processor 400, the processor 400 determines a parameter for I-1 times of arrival, one time of arrival being used as a reference. The parameter is the difference $\Delta t_i = t_i - t_l$ multiplied by the speed of the light.

All the locations which correspond to that parameter are on a hyperbolic surface.

The parameter is a constant of the hyperbolic surface from the calculated difference At$_i$ using the following formula: $f_i = c.(t_t - t_l)$.

At next step S704, the processor 400 determines for each determined parameter, two expanded parameters by applying a margin noted $\alpha$ on each determined parameter in order to take into account one uncertainty on the determined parameter.

When the time of transmission of the transmitted signal is known by the processor 400, all the locations which correspond to an expanded parameter are on a sphere.

When the time of transmission of the transmitted signal is not known by the processor 400, all the locations which correspond to an expanded parameter are on a hyperbolic surface.

The margin $\alpha$ is the one disclosed at step S604 of the Fig. 6.

At next step S705, the processor 400 checks if the variable i is equal to I.

If the variable i is equal to I, the processor 400 moves to step S707. Otherwise, the processor 400 moves to step S706, increments the variable i of one and returns to step S702 in order to execute the loop constituted by the steps S702 to S705.

At step S707, the processor 400 determines, for each n-tuple of expanded parameters composed of expanded parameters of n different parameters, a set of points from a function which takes into account the position of at least two base stations and the n-tuple of expanded parameters as disclosed at step S607 of the Fig. 6.

At next step S708, the processor 400 selects points of the determined sets of points which satisfy a condition involving the position of each base station of the group of base stations BS and all the expanded parameters as disclosed at step S608 of the Fig. 6.

At next step S709, the processor 400 determines an information representative of the location of the mobile terminal MT as disclosed at step S609 of the Fig. 6.

At next step S71 0, the processor 400 commands the transfer of the information representative of the location of the mobile terminal MT is transferred as example to the mobile terminal MT.

**Claims**

1. Method for determining the location of a device to be located in a network comprising a group of n devices having a known location and transmitting signals, comprising the steps of:

   - obtaining (S600) n plural times of arrival of the signals transmitted by the respective n devices,
   - determining (S603), for each of the n times of arrival, a parameter,
   - determining (S604) for each determined parameter, two expanded parameters by applying margins on each determined parameter in order to take into account an uncertainty on the determined parameter, the margins being dependent on the sampling time period or the bandwidth of the received transmitted signals,
   - determining (S607), for each n-tuple of expanded parameters, a set of points, each point of the set of points being at the intersection of circles or spheres or hyperbolas, the n devices having a known location being the centre of the circles or spheres or being the semi-major axis of hyperbolas and the n-tuple of expanded parameters being the radius of the circles or spheres or being the foci of the hyperbolas,
   - selecting (S608) the points of the determined sets of points which satisfy a condition involving the position of each device of the group of devices and all the expanded parameters,
   - determining (S609) the location of the device to be located from the selected points.

2. Method according to claim 1, **characterised in that** the location of the device to be located is determined by calculating a linear combination of the selected points.

3. Method according to claim 2, **characterised in that** the location of the device to be located is the barycentre of the selected points.

4. Method according to any of the claims 1 to 3, **characterised in that** plural devices having a known position transmit a signal, each device having a known position transmits a signal which is different from the signal transmitted by the other devices having a known position.

5. Method according to claim 4, **characterised in that** the device to be located is a mobile terminal and the devices having a known position are base stations of a wireless cellular network and **in that** each base station broadcasts a signal which is different from the signal broadcasted by the other base stations.

6. Method according to claim 4 or 5, **characterised in that** each determined parameter is proportional to a difference of two times of arrival of transmitted signals.

7. Method according to any of the claims 4 to 6, **characterised in that** the method is executed by the mobile terminal or one base station or a location server of the wireless cellular telecommunication network.

8. Method according to any of the claims 1 to 3, **characterised in that** the at least one device which transmits at least one signal is the device to be located.

9. Method according to claim 7, **characterised in that** the obtained times of arrival are times of arrival of the broadcasted signal received by each device having a known location of the group of devices having a known location.

10. Method according to claim 8 or 9, **characterised in that** the device to be located is a mobile terminal and the devices having a known position are base stations of a wireless cellular network.

11. Method according to claim 10, **characterised in that** the method is executed by one base station or a location server of the wireless cellular telecommunication network.

12. Apparatus for determining the location of a device to be located in a network comprising a group of n devices having a known location and transmitting signals, said apparatus comprising:

   - means for obtaining n plural times of arrival of the signals transmitted by the respective n devices,
   - means for determining, for each of the n times of arrival, a parameter,
   - means for determining for each determined parameter, two expanded parameters by applying margins on each determined parameter in order to take into account an uncertainty on the determined parameter, the margins being dependent on the sampling time period or the bandwidth of the received transmitted signals,
   - means for determining, for each n-tuple of expanded parameters, a set of points, each point of the set of points being at the intersection of circles or spheres or hyperbolas, the n devices having a known location being the centre of the circles or spheres or being the semi-major axis of hyperbolas and the n-tuple of expanded parameters being the radius of the circles or spheres or being the foci of the hyperbolas,
   - means for selecting the points of the determined sets of points which satisfy a condition involving the position of each device of the group of devices and all expanded parameters,
   - means for determining the location of the device to be located from the selected points.

13. Apparatus according to claim 12, **characterised in that** the apparatus is included in a mobile terminal or in a base station of a wireless cellular telecommunication network or in a location server of a wireless cellular telecommunication network.

14. Computer program which can be directly loadable into a programmable device, comprising instructions or portions of code for implementing the steps of the method according to claims 1 to 9, when said computer program is executed on a programmable device.

**Patentansprüche**

1. Verfahren zum Bestimmen der Lokalisierung einer in einem Netzwerk zu lokalisierenden Vorrichtung, das eine Gruppe von n Vorrichtungen aufweist, die eine bekannte Lokalisierung haben und Signale senden, welches Verfahren die folgenden Schritte aufweist:

   - Erhalten (S600) von n mehreren Ankunftszeiten der durch die jeweiligen n Vorrichtungen gesendeten Signale,
   - Bestimmen (S603) eines Parameters für jede der n Ankunftszeiten,
   - Bestimmen (S604) von zwei erweiterten Parametern für jeden bestimmten Parameter durch Anwenden von Spielräumen auf jeden bestimmten Parameter, um eine Unsicherheit an dem bestimmten Parameter zu berücksichtigen, wobei die Spielräume von der Abtastzeitperiode oder der Bandbreite der empfangenen gesendeten Signale abhängen,
   - Bestimmen (S607) eines Satzes von Punkten für jedes n-Tupel von erweiterten Parametern, wobei jeder Punkt des Satzes von Punkten eine Schnittstelle von Kreisen oder Kugeln oder Hyperbeln ist, wobei die n Vorrichtungen, die eine bekannte Lokalisierung haben, das Zentrum der Kreise oder der Kugeln oder die große Halbachse von Hyperbeln sind, und wobei das n-Tupel von erweiterten Parametern der Radius der Kreise oder der Kugeln oder die Brennpunkte der Hyperbeln ist,
   - Auswählen (S608) der Punkte der bestimmten Sätze von Punkten, die eine Bedingung erfüllen, die die Position jeder Vorrichtung der Gruppen von Vorrichtungen und alle erweiterten Parameter enthalten,
   - Bestimmen (S609) der Lokalisierung der zu lokalisierenden Vorrichtung aus den ausgewählten Punkten.

2. Verfahren nach Anspruch 1, **dadurch gekennzeichnet, dass** die Lokalisierung der zu lokalisierenden Vorrichtung durch Berechnen einer Linearkombination der ausgewählten Punkte bestimmt wird.

3. Verfahren nach Anspruch 2, **dadurch gekennzeichnet, dass** die Lokalisierung der zu lokalisierenden Vorrichtung der Massenmittelpunkt der ausgewählten Punkte ist.

4. Verfahren nach einem der Ansprüche 1 bis 3, **dadurch gekennzeichnet, dass** mehrere Vorrichtungen, die eine bekannten Position haben, ein Signal senden, wobei jede Vorrichtung, die ein bekannte Position hat, ein Signal sendet, das unterschiedlich von dem Signal ist, das durch die anderen Vorrichtung gesendet ist, die eine bekannte Position haben.

5. Verfahren nach Anspruch 4, **dadurch gekennzeichnet, dass** die zu lokalisierenden Vorrichtung ein mobiles Endgerät ist und die Vorrichtungen, die eine bekannte Position haben, Basisstationen eines drahtlosen zellularen Netzwerks sind und dass jede Basisstation ein Signal ausstrahlt, das unterschiedlich von dem Signal ist, das durch die anderen Basisstationen ausgestrahlt ist.

6. Verfahren nach Anspruch 4 oder 5, **dadurch gekennzeichnet, dass** jeder bestimmte Parameter proportional zu einer Differenz von zwei Ankunftszeiten von gesendeten Signalen ist.

7. Verfahren nach einem der Ansprüche 4 bis 6, **dadurch gekennzeichnet, dass** das Verfahren durch das mobile Endgerät oder eine Basisstation oder einen Lokalisierungsserver des drahtlosen zellularen Telekommunikationsnetzwerks ausgeführt wird.

8. Verfahren nach einem der Ansprüche 1 bis 3, **dadurch gekennzeichnet, dass** die wenigstens eine Vorrichtung, die wenigstens ein Signal sendet, die zu lokalisierende Vorrichtung ist.

9. Verfahren nach Anspruch 7, **dadurch gekennzeichnet, dass** die erhaltenen Ankunftszeiten Ankunftszeiten des ausgestrahlten Signals sind, das durch jede Vorrichtung, die eine bekannte Lokalisierung hat, der Gruppe von Vorrichtungen, die eine bekannte Lokalisierung haben, empfangen ist.

10. Verfahren nach Anspruch 8 oder 9, **dadurch gekennzeichnet, dass** die zu lokalisierende Vorrichtung ein mobiles Endgerät ist und die Vorrichtungen, die eine bekannte Position haben, Basisstationen eines drahtlosen zellularen Netzwerks sind.

11. Verfahren nach Anspruch 10, **dadurch gekennzeichnet, dass** das Verfahren durch eine Basisstation oder einen Lokalisierungsserver des drahtlosen zellularen Telekommunikationsnetzwerks ausgeführt wird.

12. Vorrichtung zum Bestimmen der Lokalisierung einer in einem Netzwerk zu lokalisierenden Vorrichtung, das eine Gruppe von n Vorrichtungen hat, die eine bekannte Lokalisierung haben und Signale senden, wobei die Vorrichtung folgendes aufweist:

- eine Einrichtung zum Erhalten von n mehreren Ankunftszeiten der durch die jeweiligen n Vorrichtungen gesendeten Signale,
- eine Einrichtung zum Bestimmen eines Parameters für jede der n Ankunftszeiten,
- eine Einrichtung zum Bestimmen von zwei erweiterten Parametern für jeden bestimmten Parameter durch Anwenden von Spielräumen auf jeden bestimmten Parameter, um eine Unsicherheit an dem bestimmten Parameter zu berücksichtigen, wobei die Spielräume von der Abtastzeitperiode oder der Bandbreite der empfangenen gesendeten Signale abhängen,
- eine Einrichtung zum Bestimmen eines Satzes von Punkten für jedes n-Tupel von erweiterten Parametern, wobei jeder Punkt des Satzes von Punkten eine Schnittstelle von Kreisen oder Kugeln oder Hyperbeln ist, wobei die n Vorrichtungen, die eine bekannte Lokalisierung haben, das Zentrum der Kreise oder der Kugeln oder die große Halbachse von Hyperbeln sind, und wobei das n-Tupel von erweiterten Parametern der Radius der Kreise oder der Kugeln oder die Brennpunkte der Hyperbeln ist,
- eine Einrichtung zum Auswählen der Punkte der bestimmten Sätze von Punkten, die eine Bedingung erfüllen, die die Position jeder Vorrichtung der Gruppen von Vorrichtungen und alle erweiterten Parameter enthalten,
- eine Einrichtung zum Bestimmen der Lokalisierung der zu lokalisierenden Vorrichtung aus den ausgewählten Punkten.

13. Vorrichtung nach Anspruch 12, **dadurch gekennzeichnet, dass** die Vorrichtung in einem mobilen Endgerät oder in einer Basisstation eines drahtlosen zellularen Telekommunikationsnetzwerks oder in einem Lokalisierungsserver eines drahtlosen zellularen Telekommunikationsnetzwerks enthalten ist.

14. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 9, wenn das Computerprogramm auf einer programmierbaren Vorrichtung ausgeführt wird.

**Revendications**

1. Procédé pour déterminer la position d'un dispositif à localiser dans un réseau comprenant un groupe de n dispositifs ayant une position connue et transmettant des signaux, comprenant les étapes :

   - d'obtention (S600) de n plusieurs temps d'arrivée des signaux transmis par les n respectifs dispositifs,
   - de détermination (S603), pour chacun des n temps d'arrivée, d'un paramètre,
   - de détermination (S604) pour chaque paramètre déterminé, de deux paramètres élargis en appliquant des marges sur chaque paramètre déterminé de manière à prendre en compte une incertitude sur le paramètre déterminé, les marges étant dépendantes de la période temporelle d'échantillonnage ou de la bande passante des signaux transmis reçus,
   - de détermination (S607), pour chaque $n$-uplet de paramètres élargis, d'un ensemble de points, chaque point de l'ensemble de points étant à l'intersection de cercles ou sphères ou hyperboles, les n dispositifs ayant une position connue étant le centre des cercles ou sphères ou étant le demi-grand axe des hyperboles et les $n$-uplet de paramètres élargis étant le rayon des cercles ou sphères ou étant le foyer des hyperboles,
   - de sélection (S608) des points de l'ensemble de points déterminé qui satisfont une condition impliquant la position de chaque dispositif du groupe de dispositifs et tous les paramètres élargis,
   - de détermination (S609) de la position du dispositif à localiser à partir des points sélectionnés.

2. Procédé selon la revendication 1, **caractérisé en ce que** la position du dispositif à localiser est déterminée en calculant une combinaison linéaire des points sélectionnés.

3. Procédé selon la revendication 2, **caractérisé en ce que** la position du dispositif à localiser est le barycentre des points sélectionnés.

4. Procédé selon l'une quelconque des revendications 1 à 3, **caractérisé en ce que** plusieurs dispositifs ayant une position connue transmettent un signal, chaque dispositif ayant une position connue transmet un signal qui est différent du signal transmis par les autres dispositifs ayant une position connue.

5. Procédé selon la revendication 4, **caractérisé en ce que** le dispositif à localiser est un terminal mobile et les dispositifs ayant une position connue sont des stations de base d'un réseau cellulaire sans-fil et **en ce que** chaque station de base diffuse un signal qui est différent du signal diffusé par les autres stations de base.

6. Procédé selon la revendication 4 ou 5, **caractérisé en ce que** chaque paramètre déterminé est proportionnel à une différence de deux temps d'arrivée de signaux transmis.

7. Procédé selon l'une quelconque des revendications 4 à 6, **caractérisé en ce que** le procédé est exécuté par le terminal mobile ou une station de base ou un serveur de localisation du réseau cellulaire de télécommunication sans-fil.

8. Procédé selon l'une quelconque des revendications 1 à 3, **caractérisé en ce que** le au moins un dispositif qui transmet au moins un signal est le dispositif à localiser.

9. Procédé selon la revendication 7, **caractérisé en ce que** les temps d'arrivée obtenus sont des temps d'arrivée du signal diffusé reçu par chaque dispositif ayant une position connue du groupe de dispositifs ayant une position connue.

10. Procédé selon la revendication 8 ou 9, **caractérisé en ce que** le dispositif à localiser est un terminal mobile et les dispositifs ayant une position connue sont des stations de base d'un réseau cellulaire sans-fil.

11. Procédé selon la revendication 10, **caractérisé en ce que** le procédé est exécuté par une station de base ou un serveur de localisation du réseau cellulaire de télécommunication sans-fil.

12. Appareil pour déterminer la position d'un dispositif à localiser dans un réseau comprenant un groupe de n dispositifs ayant une position connue et transmettant des signaux, ledit appareil comprenant :

- des moyens d'obtention de n plusieurs temps d'arrivée des signaux transmis par les *n* respectifs dispositifs,
- des moyens de détermination, pour chacun des n temps d'arrivée, d'un paramètre,
- des moyens de détermination pour chaque paramètre déterminé, de deux paramètres élargis en appliquant des marges sur chaque paramètre déterminé de manière à prendre en compte une incertitude sur le paramètre déterminé, les marges étant dépendantes de la période temporelle d'échantillonnage ou de la bande passante des signaux transmis reçus,
- des moyens de détermination, pour chaque n-uplet de paramètres élargis, d'un ensemble de points, chaque point de l'ensemble de points étant à l'intersection de cercles ou sphères ou hyperboles, les n dispositifs ayant une position connue étant le centre des cercles ou sphères ou étant le demi-grand axe des hyperboles et les n-uplet de paramètres élargis étant le rayon des cercles ou sphères ou étant le foyer des hyperboles,
- des moyens de sélection des points de l'ensemble de points déterminé qui satisfont une condition impliquant la position de chaque dispositif du groupe de dispositifs et tous les paramètres élargis,
- des moyens de détermination de la position du dispositif à localiser à partir des points sélectionnés.

**13.** Appareil selon la revendication 12, **caractérisé en ce que** l'appareil est inclus dans un terminal mobile ou dans une station de base d'un réseau cellulaire de télécommunication sans-fil ou dans un serveur de localisation d'un réseau cellulaire de télécommunication sans-fil.

**14.** Programme d'ordinateur qui peut être directement chargé dans un dispositif programmable, comprenant des instructions ou portions de code pour mettre en oeuvre les étapes du procédé selon les revendications 1 à 9, lorsque ledit programme d'ordinateur est exécuté par un dispositif programmable.

Fig. 1

Fig. 2

MT

300 — Processor

303 — RAM

302 — ROM

301

305

Wireless I/F

MTAnt

**Fig. 3**

LS

400 — Processor

Network I/F — 406

403 — RAM

401

402 — ROM

**Fig. 4**

BS

500 — Processor

Network I/F — 506

503 — RAM

Wireless I/F — 505

502 — ROM

501

**Fig. 5**

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10308005

**Non-patent literature cited in the description**

- **Ralph Bucher ; D. Misra.** A synthesizable VHDL Model of the Exact Solution for Three-dimentional Hyperbolic Positioning System. *VLSI Design,* 2002, vol. 15 (2), 507-520